# EUROPEAN PATENT APPLICATION

(11) **EP 4 847 168 A1**
(43) Date of publication of application: **02.12.2026**
(21) Application number: 26181405.7
(22) Date of filing: 27.05.2026
(51) Int. Cl.: B22F 10/25, B22F 5/00, B22F 7/06, B22F 10/28, B23K 26/342, B23P 15/00, B33Y 10/00, B33Y 80/00, F01D 5/00, F01D 5/04, F01D 5/10, F01D 5/26, F01D 5/28, F01D 5/34, B22F 10/80, B23K 101/00, B23K 103/18, B33Y 50/00, F01D 5/14

(54) **MULTI-MATERIAL ROTATING PARTS AND METHOD OF MANUFACTURE**

(30) Priority: 30.05.2025 US 202563815171 P
(71) Applicant: RTX Corporation, Farmington, CT 06032 (US)
(72) Inventor: BINEK, Lawrence, Farmington, CT 06032 (US); BREITZMANN, Peter, Farmington, CT 06032 (US)
(74) Representative: Dehns

(57) **Abstract**

A method of forming a rotor (36) for a turbomachine includes identifying, on an initial rotor (20) formed of a first material, a region (32) of modal deflection at a defined operational speed of the rotor (36), producing an intermediate component (34) with the first material, and forming, on the intermediate component (34), a replacement portion (38) to form the rotor (36). The replacement portion (38) corresponds to the region (32) of modal deflection is formed of a second material that differs from the first material in material composition and/or microstructure. The rotor (36) has the same geometry as the initial rotor (20).

## Description

### BACKGROUND

The present invention is directed generally to additive manufacturing and, more particularly, to rotating components of a turbomachine and method of manufacture.

Rotating turbomachine components that exhibit significant modal response at operating conditions experience high cycle fatigue and are prone to failure, which can cause significant rotor imbalance and/or rotor rub. Modal analysis can be used in the design of rotating components to shift the natural frequencies to avoid resonance. For example, the natural frequency of a rotor may be altered by adding or removing mass and/or by modifying the stiffness of the rotor. The addition or subtraction of material or changes in shape or size to modify stiffness is not feasible in some applications due to geometric design constraints.

### SUMMARY

According to an aspect of the invention, a method of forming a rotor for a turbomachine includes identifying, on a rotor (e.g., an initial or first rotor) formed of a first material, a region of modal deflection at a defined operational speed of the rotor, producing an intermediate component or rotor with the first material, and forming, on the intermediate component, a portion (e.g., a replacement portion) to form the rotor (e.g., a second or adjusted rotor). The portion corresponds to the region of modal deflection is formed of a second material that differs from the first material in material composition and/or microstructure. The rotor has the same geometry as the initial rotor.

According to another aspect of the invention, method of forming a rotor for a turbomachine includes identifying a region on a rotor (e.g., an initial or first rotor) of modal deflection at a defined operational speed of the rotor and forming the rotor (e.g., a second or adjusted rotor) with a first material and a second material. The first material and the second material differ in material composition and/or microstructure. The second material forms a portion of the rotor corresponding to the region of modal deflection.

The methods of the preceding paragraphs can optionally include, additionally and/or alternatively, any one or more of the following features, configurations, additional components, and/or steps:

In any of the aspects or embodiments described above or herein, producing the intermediate component may include forming an initial intermediate component having a geometry of the initial rotor and removing a portion of the initial intermediate component corresponding to the region of modal deflection. The portion of the initial intermediate component may be removed via machining. Alternatively, producing the intermediate component may include forming the intermediate component having a geometry of the initial rotor with the portion corresponding to the region of modal deflection excluded.

In any of the aspects or embodiments described above or herein, the second material of the portion or replacement portion corresponding to the region of modal deflection may be selected to reduce the modal response at the defined operational speed of the rotor.

In any of the aspects or embodiments described above or herein, the intermediate component may be produced via a powder bed additive manufacturing process. In any of the aspects or embodiments described above or herein, the intermediate component may be built via laser powder bed fusion.

In any of the aspects or embodiments described above or herein, the portion or replacement portion may be formed on the intermediate component by directed energy deposition. In any of the aspects or embodiments described above or herein, the second material may have the same material composition as the first material and process parameters of the directed energy deposition may be selected to provide the second material with a different microstructure than the first material.

In any of the aspects or embodiments described above or herein, the second material may have the different material composition than the first material.

In any of the aspects or embodiments described above or herein, the region of modal deflection may be located on a blade of the rotor. In any of the aspects or embodiments described above or herein, the rotor may be a radial flow turbine. In any of the aspects or embodiments described above or herein, the region of modal deflection may be located at a trailing edge of the blade.

In any of the aspects or embodiments described above or herein, the initial rotor may have a geometry of the rotor and is formed of the first material.

In any of the aspects or embodiments described above or herein, forming the rotor may include forming the rotor with the first material, removing a portion of the rotor corresponding to the region of modal deflection, and replacing the portion removed with a replacement portion comprising the second material. The geometry of the replacement portion may match a geometry of the portion removed.

In any of the aspects or embodiments described above or herein, the replacement portion may be formed by directed energy deposition.

In any of the aspects or embodiments described above or herein, forming the rotor may include producing or forming an intermediate component or rotor with the first material. In any of the aspects or embodiments described above or herein, the intermediate component or rotor may have a geometry of the rotor excluding a portion corresponding to the region of modal deflection. Forming the rotor may include forming the portion corresponding to the region of modal deflection with the second material.

In any of the aspects or embodiments described above or herein, the portion may be formed by directed energy deposition.

In any of the aspects or embodiments described above or herein, the rotor, excluding the portion corresponding to the region of modal deflection, may be formed by laser powder bed fusion.

In any of the aspects or embodiments described above or herein, the second material may be selected to reduce the modal response at the defined operational speed of the rotor.

In any of the aspects or embodiments described above or herein, the second material may have the same material composition as the first material and process parameters of the directed energy deposition may be selected to provide the second material with a different microstructure than the first material.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

Certain exemplary embodiments will now be described in greater detail by way of example only and with reference to the accompanying drawings in which:
FIG. 1 is a flowchart illustrating steps of a method for forming a rotor of a turbomachine.
FIG. 2 is a perspective view of a rotor at various stages according to the method of FIG. 1.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

The present disclosure is directed to a method of designing and forming rotating components of a turbomachine to account for modal response at operational speeds. As disclosed herein, a hybrid manufacturing process uses directed energy deposition to replace one or more portions of a rotor with a different material to avoid frequencies that lead to high-cycle fatigue and can result in failure of the rotor during operation. Directed energy deposition can be used to tune the rotor to predicted mission requirements (i.e., operational speeds) without modifying the geometry of the rotor.

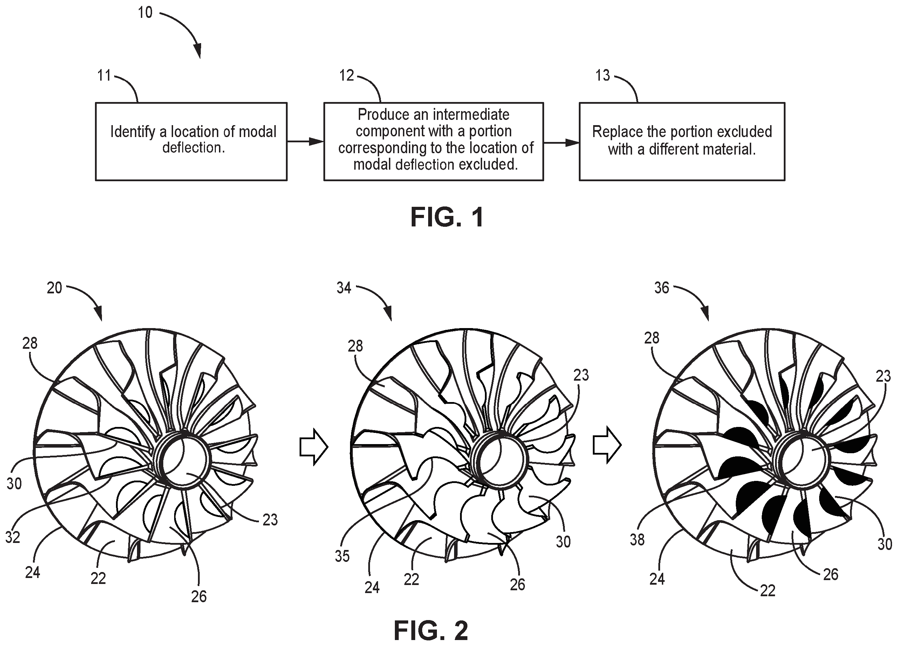

FIG. 1 is a flowchart illustrating steps of method 10 for forming a rotating component (i.e., rotor) of a turbomachine. FIG. 2 is a perspective view of a rotor at various stages according to the method of FIG. 1. FIGS. 1 and 2 are discussed together. FIG. 1 shows steps 11-13 of method 10. FIG. 2 shows initial rotor 20, hub 22, shaft portion 23, disk portion 24, blades 26, leading edges 28, trailing edges 30, region 32 of modal deflection, intermediate component 34, cutout 35, adjusted rotor 36, and replacement portion 38. Initial rotor 20 and adjusted rotor 36 have the same geometry. Initial rotor 20 includes regions 32 of modal deflection. Adjusted rotor 36 includes replacement portions 38 corresponding to regions 32 but formed of a material that alters the modal response of adjusted rotor 36 at defined operational speeds. Intermediate component 34 has the same geometry as initial rotor 20 and adjusted rotor 36 with regions 32 excluded.

As illustrated in FIG. 2, initial rotor 20 and adjusted rotor 36 can be an integrally bladed rotor or impeller. Initial rotor 20 and adjusted rotor 36 can be a radial flow turbine with hub 22 having shaft portion 23, disk portion 24 and blades 26, and with leading edges 28 of blades 26 disposed adjacent to disk portion 24 and trailing edges 30 of blades 26 disposed adjacent to shaft portion 23. Alternatively, initial rotor 20 and adjusted rotor 36 can be a compressor with a fluid inlet adjacent to shaft portion 23 and outlet adjacent to disk portion 24. It will be understood by one of ordinary skill in the art that the geometry of initial rotor 20 and adjusted rotor 36 is not limited to that shown and that the methods disclosed herein can be applied to rotating parts of varying configurations. More generally, the approach of method 10 described hereinafter with respect to rotors 20, 36 can be applied to any other intentionally tuned or mistuned components for which modal adjustment is necessary but changes to part geometry are undesirable or unacceptable.

In step 11, modal analysis is conducted for initial rotor 20, having a defined geometry and material composition, to identify one or more regions on initial rotor 20 of modal deflection at one or more defined operating speeds. As used herein, "modal deflection" refers to a pronounced vibration response influenced by the natural frequencies or modal frequencies of the rotor, which can cause high-cycle fatigue and result in failure of the component. Defined operational speeds can be any speed at which adjusted rotor 36 is predicted to operate for periods of time sufficient to cause high cycle fatigue due to modal deflection.

Modal analysis can be conducted computationally through finite element analysis, creating a mathematical model of initial rotor 20 and simulating the dynamic behavior of initial rotor 20 at defined operational speeds. Modal analysis identifies mode shapes, representing a pattern of vibration at each natural frequency of initial rotor 20. The mode shapes can be used to identify one or more regions on initial rotor 20 of concentrated vibration or locations exhibiting significant modal response indicative of operating at a specific mode for too long. The identified one or more regions are delineated on initial rotor 20 and define a shape and location of a modal response adjustment material provided to reduce resonance at a desired operating speed as discussed further herein.

As illustrated in FIG. 2, regions 32 of modal deflection are identified on initial rotor 20. In this embodiment, regions 32 are located on trailing edge 30 of blade 26. Regions 32 have a defined shape and location determined by modal analysis. Different mode shapes can be exhibited at different speeds. Typically, modal deflection is observed on trailing edge 30 but the shape may vary. It will be understood by one of ordinary skill in the art that the location and shape of regions 32 of modal deflection will vary based on the geometry, material properties, and operational speeds of initial rotor 20. The material of initial rotor 20 can be, for example, a nickel-based superalloy commonly used in high temperature and aerospace applications. The material properties, including the microstructure (e.g., texture and anisotropy), which affect the material's modulus, can be characterized.

In step 12, intermediate component 34 is produced with the material of initial rotor 20. Intermediate component 34 has a geometry of initial rotor 20 with one or more regions 32 corresponding to the location of modal deflection excluded or removed, as illustrated by cutouts 35. Intermediate component 34 can be formed by an additive manufacturing process including, for example, laser powder bed fusion or electron beam powder bed manufacturing methods.

In one embodiment, intermediate component 34 is formed in a two-step process. In the first step, an initial intermediate component having the geometry and material composition of initial rotor 20 is formed. The initial intermediate component is formed from a first material (e.g., nickel-based superalloy) suitable for operation in a desired application. The initial intermediate component can be built via a powder bed additive manufacturing process.

In the second step, regions 32 of modal deflection are defined on the initial intermediate component and removed to form intermediate component 34 with cutouts 35 corresponding to the shape and location of regions 32. Regions 32 can be excised from the initial intermediate component via a suitable subtractive machining technique known in the art.

In an alternative embodiment, intermediate component 34 is formed from the first material with regions 32 excluded. For example, intermediate component 34 can be built via a powder bed additive manufacturing process without regions 32.

In step 13, a second material is selectively added to intermediate component 34 to form replacement portions 38 and adjusted rotor 36. The second material can have the same material composition as the first material (e.g., nickel-based superalloy) but different microstructure or can have a different material composition than the first material. Adjusted rotor 36 is thereby formed with a first region defined by the geometry of intermediate component 34 from the first material and a second region defined by replacement portions 38 formed from the second material. Replacement portions 38 correspond to regions 32 of modal deflection identified in initial rotor 20. Replacement portions 38 have the shape and size of regions 32 of initial rotor 20 and are provided in cutouts 35 of intermediate component 34. FIG. 2 shows adjusted rotor 36 with replacement portions 38. With the addition of replacement portions 38, adjusted rotor 36 has the same geometry as initial rotor 20.

Replacement portions 38 are formed directly on intermediate component 34 by a directed energy deposition (DED) technique including, for example, laser-based DED or electron beam-based DED with powder or wire feedstock. As noted above, replacement portions 38 are formed of a second material suitable for welding on intermediate component 34. The material composition or microstructure of replacement portions 38 is selected to alter the mass and/or stiffness of adjusted rotor 36 to avoid resonance at defined operational speeds. In some embodiments, the second material of replacement portions 38 can have the same material composition (e.g., nickel-based superalloy) as the first material but the microstructure of the second material differs from that of the first material. Variations in the microstructure (i.e., texture or anisotropy) can alter the modulus of the second material, which directly influences deflection when subjected to a force. As such, altering the microstructure of replacement portions 38 can alter the modal response of adjusted rotor 36 at defined operational speeds. The microstructure of the second material can be controlled through the DED process by adjusting process parameters (e.g., laser power, scanning speed, material feed rate). Alternatively, replacement portions 38 can be formed from a second material having a different material composition than the first material. For replacement portions 38 formed with a second material having a different material composition than the first material, selection of the second material can additionally be based on material property requirements for a desired application, e.g., material stiffness, thermal expansion, yield strength, ultimate tensile strength).

The addition of replacement portions 38 can shift the modal response of individual airfoils without altering modal response of hub 22 (shaft portion 23 and disk portion 24). The material of replacement portions 38 can be selected via finite element analysis, simulating the dynamic behavior of adjusted rotor 36 at defined operational speeds.

The disclosed hybrid additive manufacturing method can be used to fine tune rotors to predicted mission requirements (i.e., operational speeds) without modifying the geometry of the rotor. As disclosed herein, directed energy deposition techniques can be used to selectively change the material composition and properties of regions of rotating components identified as exhibiting significant modal response at defined operational speeds.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

A method of forming a rotor for a turbomachine includes identifying, on an initial rotor formed of a first material, a region of modal deflection at a defined operational speed of the rotor, producing an intermediate component with the first material, and forming, on the intermediate component, a replacement portion to form the rotor. The replacement portion corresponds to the region of modal deflection is formed of a second material that differs from the first material in material composition and/or microstructure. The rotor has the same geometry as the initial rotor.

The method of the preceding paragraph can optionally include, additionally and/or alternatively, any one or more of the following features, configurations, additional components, and/or steps:

In an embodiment of the foregoing method, producing the intermediate component can include forming an initial intermediate component having a geometry of the initial rotor and removing a portion of the initial intermediate component corresponding to the region of modal deflection. The portion of the initial intermediate component can be removed via machining. Alternatively, producing the intermediate component can include forming the intermediate component having a geometry of the initial rotor with the portion corresponding to the region of modal deflection excluded.

In an embodiment of any of the foregoing methods, the second material of the replacement portion corresponding to the region of modal deflection is selected to reduce the modal response at the defined operational speed of the rotor.

In an embodiment of any of the foregoing methods, the intermediate component can be produced via a powder bed additive manufacturing process. In one embodiment, the intermediate component can be built via laser powder bed fusion.

In an embodiment of any of the foregoing methods, the replacement portion can be formed on the intermediate component by directed energy deposition. In some embodiments, the second material can have the same material composition as the first material and process parameters of the directed energy deposition can be selected to provide the second material with a different microstructure than the first material.

In an embodiment of any of the foregoing methods, the second material can have the different material composition than the first material.

In an embodiment of any of the foregoing methods, the region of modal deflection can be located on a blade of the rotor. In some embodiments, the rotor can be a radial flow turbine. In some embodiments, the region of modal deflection can be located at a trailing edge of the blade.

A method of forming a rotor for a turbomachine includes identifying a region on an initial rotor of modal deflection at a defined operational speed of the rotor and forming the rotor with a first material and a second material. The first material and the second material differ in material composition and/or microstructure. The second material forms a portion of the rotor corresponding to the region of modal deflection.

In an embodiment of the foregoing method, the initial rotor has a geometry of the rotor and is formed of the first material.

The method of the preceding paragraph can optionally include, additionally and/or alternatively, any one or more of the following features, configurations, additional components, and/or steps:

In an embodiment of any of the foregoing methods, forming the rotor can include forming the rotor with the first material, removing a portion of the rotor corresponding to the region of modal deflection, and replacing the portion removed with a replacement portion comprising the second material. The geometry of the replacement portion matches a geometry of the portion removed.

In an embodiment of any of the foregoing methods, the replacement portion can be formed by directed energy deposition.

In an embodiment of any of the foregoing methods, forming the rotor can include forming an intermediate rotor with the first material, the intermediate rotor having a geometry of the rotor excluding a portion corresponding to the region of modal deflection, and forming the portion corresponding to the region of modal deflection with the second material. The portion can be formed by directed energy deposition. The rotor, excluding the portion corresponding to the region of modal deflection, can be formed by laser powder bed fusion.

In an embodiment of any of the foregoing methods, the second material can be selected to reduce the modal response at the defined operational speed of the rotor.

In an embodiment of any of the foregoing methods, the second material can have the same material composition as the first material and process parameters of the directed energy deposition can be selected to provide the second material with a different microstructure than the first material.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a rotor (36) for a turbomachine, the method comprising:
identifying a region (32) on an initial rotor (20) of modal deflection at a defined operational speed of the rotor (36); and
forming the rotor (36) with a first material and a second material, wherein the second material forms a portion (38) of the rotor (36) corresponding to the region (32) of modal deflection, and wherein the first material and the second material differ in material composition and/or microstructure.

2. The method of claim 1, wherein the initial rotor (20) has a geometry of the rotor (36) and is formed of the first material.

3. The method of claim 1 or 2, wherein forming the rotor (36) comprises:
forming the rotor (36) with the first material;
removing a portion of the rotor corresponding to the region (32) of modal deflection; and
replacing the portion removed with a replacement portion (38) comprising the second material, wherein a geometry of the replacement portion (38) matches a geometry of the portion removed.

4. The method of claim 3, wherein the replacement portion (38) is formed by directed energy deposition.

5. The method of claim 1 or 2, wherein forming the rotor (36) comprises:
forming an intermediate rotor (34) with the first material, the intermediate rotor (34) having a geometry of the rotor (36) excluding the portion corresponding to the region (32) of modal deflection; and
forming the portion (38) corresponding to the region (32) of modal deflection with the second material, wherein the portion (38) is formed by directed energy deposition.

6. The method of any preceding claim, wherein the rotor, excluding the portion corresponding to the region (32) of modal deflection, is formed by laser powder bed fusion.

7. A method of forming a rotor (36) for a turbomachine; the method comprising
identifying, on an initial rotor (20) formed of a first material, a region (32) of modal deflection at a defined operational speed of the rotor (36);
producing an intermediate component (34) with the first material; and
forming, on the intermediate component (34), a replacement portion (38) to form the rotor (36), the replacement portion (38) corresponding to the region (32) of modal deflection and formed of a second material, wherein the second material differs from the first material in material composition and/or microstructure, and wherein the rotor (36) has the same geometry as the initial rotor (20).

8. The method of claim 7, wherein producing the intermediate component (34) comprises one of:
forming an initial intermediate component (34) having a geometry of the initial rotor (20) and removing a portion of the initial intermediate component (34) corresponding to the region (32) of modal deflection; and
forming the intermediate component (34) having a geometry of the initial rotor (20) with the portion corresponding to the region (32) of modal deflection excluded,
wherein, optionally, the portion of the initial intermediate component (34) is removed via machining.

9. The method of claim 7 or 8, wherein the intermediate component (34) is produced via a powder bed additive manufacturing process, optionally, wherein the intermediate component (34) is built via laser powder bed fusion.

10. The method of claim 7, 8 or 9, wherein the replacement portion (38) is formed on the intermediate component (34) by directed energy deposition.

11. The method of any of claims 4, 5 or 10, wherein the second material has the same material composition as the first material and wherein process parameters of the directed energy deposition are selected to provide the second material with a different microstructure than the first material.

12. The method of any of claims 1 to 10, wherein the second material has a different material composition than the first material.

13. The method of any preceding claim, wherein the second material is selected to reduce the modal response at the defined operational speed of the rotor (36).

14. The method of any preceding claim, wherein the region (32) of modal deflection is located on a blade (26) of the rotor, wherein, optionally, the region (32) of modal deflection is located at a trailing edge of the blade (26).

15. The method of any preceding claim, wherein the rotor is a radial flow turbine.
